(19) Europäisches Patentamt
European Patent Office
Office européen des brevets

(11) **EP 4 345 154 A1**

(12) **EUROPEAN PATENT APPLICATION**
published in accordance with Art. 153(4) EPC

(43) Date of publication:
**03.04.2024 Bulletin 2024/14**

(21) Application number: **22774954.6**

(22) Date of filing: **02.03.2022**

(51) International Patent Classification (IPC):
**C11B 5/00** (2006.01)    **C11B 15/00** (2006.01)
**A23D 9/02** (2006.01)

(52) Cooperative Patent Classification (CPC):
**C11B 15/00; A23D 9/00; A23D 9/007; A23D 9/02;
A23D 9/04; A23L 29/294; C11B 5/00**

(86) International application number:
**PCT/JP2022/008746**

(87) International publication number:
**WO 2022/202158 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.03.2021 JP 2021048754**

(71) Applicant: **Fuji Oil Holdings Inc.
Izumisano-shi, Osaka 598-8540 (JP)**

(72) Inventor: **MIZUSHIMA, Shigeki
Tsukubamirai-shi, Ibaraki 300-2436 (JP)**

(74) Representative: **Dennemeyer & Associates S.A.
Postfach 70 04 25
81304 München (DE)**

(54) **METHOD FOR PROMOTING SOLIDIFICATION OF OIL AND FAT**

(57)    A subject of the present invention is to provide a method capable of simply accelerating solidification of oil and fat and to provide a solidification accelerator used in the solidification acceleration method. It is found that solidification of object oil and fat is accelerated only by adding a silicate having a fatty acid adsorption capability and a free fatty acid to oil and fat to be solidification-accelerated, and the present invention has been completed.

EP 4 345 154 A1

**Description**

TECHNICAL FIELD

The present invention relates to a method for accelerating solidification of oil and fat and a solidification accelerator used in the method.

BACKGROUND ART

In food products that contain oil and fat, the solidification behaviors of oil and fat may greatly affect the product design, production, storage, and the like of the food products. In particular, oil and fat compositions such as margarine, shortening, chocolates, and hard butter products used for baking and breadmaking have a high ratio of oil and fat in the make-up and may depend on the solidification behaviors of the oil and fat used.

Patent Literature 1 proposes use of waxes as a means for accelerating solidification of oil and fat. Patent Literature 2 discloses a technique for accelerating solidification using a solidification accelerator that contains talc as a main component. Patent Literature 3 discloses a technique for accelerating solidification using a solidification accelerator derived from palm fruit. As a method for accelerating solidification of oil and fat, Patent Literature 4 discloses a crystallization method using a graphite sheet.

CITATION LIST

PATENT LITERATURE

Patent Literature 1: JP-A-2014-11962
Patent Literature 2: WO 2013/146526 A
Patent Literature 3: WO 2013/172075 A
Patent Literature 4: JP-A-2015-183080

SUMMARY OF INVENTION

PROBLEMS TO BE SOLVED BY INVENTION

An object of the present invention is to provide a method capable of simply accelerating solidification of oil and fat and to provide a solidification accelerator used in the solidification acceleration method.

SOLUTION TO PROBLEMS

The present inventor has conducted intensive studies for solving the above-described problems. It cannot be said that Patent Literature 1 has a clear solidification accelerating effect only by the change in the solid fat content when wax is added. Patent Literature 2 describes that the type and shape of talc affect the solidification accelerating effect, which complicates its use. The solidification accelerator derived from palm fruit of Patent Literature 3 is complicated in the production and has a large environmental load during production. In the crystallization method using a graphite sheet of Patent Literature 4, a special crystallizer with a graphite sheet processed is required, which lacks versatility, and a technique capable of obtaining a stronger solidification accelerating effect has been required.

As a result of further studies by the present inventor, it was found that the solidification of oil and fat to be solidification-accelerated is accelerated only by adding a silicate having a fatty acid adsorption capability and a free fatty acid to the oil and fat, and the present invention has been completed.

That is, the present invention relates to the following:

(1) A method for accelerating solidification of oil and fat, including allowing (A) and (B) below to coexist in oil and fat to be solidification-accelerated:

(A) a silicate having a fatty acid adsorption ratio of 8% or more in an average particle diameter during use; and
(B) a free fatty acid in an amount of 0.01% by weight or more and 5.0% by weight or less in oil and fat.

(2) The method for accelerating solidification of oil and fat according to (1), in which the free fatty acid is a saturated fatty acid having 12 to 24 carbon atoms.

(3) The method for accelerating solidification of oil and fat according to (1), in which the free fatty acid is an unsaturated fatty acid having 12 to 24 carbon atoms.

(4) The method for accelerating solidification of oil and fat according to (1), in which the free fatty acid is a mixture of a saturated fatty acid having 12 to 24 carbon atoms and an unsaturated fatty acid having 12 to 24 carbon atoms.

(5) The method for accelerating solidification of oil and fat according to any one of (1) to (4), in which the silicate is amorphous silica.

(6) The method for accelerating solidification of oil and fat according to any one of (1) to (5), in which a coexistence ratio of the free fatty acid and the silicate (A/B ratio) is 0.001 or more and 50 or less, provided that A indicates the free fatty acid (% by weight), and B indicates the silicate amount (% by weight).

(7) The method for accelerating solidification of oil and fat according to any one of (1) to (6), in which the silicate is added in an amount of 0.05% by weight or more and 5.0% by weight or less with respect to the oil and fat to be solidification-accelerated.

(8) A solidification accelerator for oil and fat including the silicate, which is used in the method for accelerating solidification of oil and fat according to any one of (1) to (7).

(9) A method for producing oil and fat, including: a solidification step in a production step; and performing fractionation after the solidification, in which solidification is accelerated by using the method for accelerating solidification of oil and fat according to any one of (1) to (7), and a time until completion of the fractionation after the solidification is shortened.

In other words, the present invention relates to the following:

(11) A method for accelerating solidification of oil and fat, including allowing a silicate having a fatty acid adsorption ratio of 8% or more in an average particle diameter during use and a free fatty acid in an amount of 0.01% by weight or more and 5.0% by weight or less to coexist in oil and fat to be solidification-accelerated.

(12) The method for accelerating solidification of oil and fat according to (11), in which the free fatty acid is a saturated fatty acid having 12 to 24 carbon atoms or an unsaturated fatty acid having 12 to 24 carbon atoms.

(13) The method for accelerating solidification of oil and fat according to (11) or (12), in which a coexistence ratio of the free fatty acid and the silicate (A/B ratio) is 0.001 or more and 50 or less, provided that A indicates the free fatty acid (% by weight), and B indicates the silicate amount (% by weight).

(14) The method for accelerating solidification of oil and fat according to any one of (11) to (13), in which the silicate is added in an amount of 0.05% by weight or more and 5.0% by weight or less with respect to the oil and fat to be solidification-accelerated.

(15) A solidification accelerator for oil and fat including the silicate, which is used in the method for accelerating solidification of oil and fat according to any one of (11) to (14).

(16) A method for producing oil and fat, including a solidification step in a production step, in which the method for accelerating solidification of oil and fat according to any one of (11) to (14) is used.

EFFECTS OF INVENTION

According to the present invention, it is possible to simply accelerate solidification of oil and fat and to obtain a solidification accelerator for oil and fat which can be simply used.

BEST MODE OF CARRYING OUT INVENTION

Hereinafter, the present invention will be specifically described.

(Silicate)

In the present invention, the silicate is a substance that contains silicon and is a generic term for compounds that contain an anion having a structure in which an electronegative ligand surrounds a silicon atom with one or several silicon atoms in the center, such as silicon dioxide. A silicate generally includes crystalline silica having a periodic regular crystal structure and amorphous silica having no regularity. Examples of the crystalline silica include talc, kaolin, zeolite, cristobalite, and synthetic quartz glass, and examples of the amorphous silica include diatomaceous earth, silicon dioxide, silica gel, magnesium silicate, calcium silicate, and white clay. Among them, the silicate in the present invention is desirably amorphous silica, more desirably silicon dioxide, calcium silicate, and magnesium silicate, and further desirably calcium silicate and magnesium silicate. By using an appropriate silicate, a preferable solidification accelerating effect of oil and fat can be obtained. In addition, the silicate is not particularly limited to a natural product or a synthetic product, as long as it is one of the substances mentioned herein. The silicate of the present invention is not limited to a food additive.

(Fatty acid adsorption capability)

In the method for accelerating solidification of oil and fat according to the present invention, it is necessary to use a silicate having a fatty acid adsorption capability. The fatty acid adsorption capability as described herein is an index indicating the binding ability between a silicate in an average particle diameter during use and a fatty acid and is based on the following calculation. That is, to palm oil formulated with 1% by weight of a free palmitic acid as a substrate, 1% by weight of a silicate having an average particle diameter during use as an adsorbent is added. Thereafter, the mixture is shaken at 150 rpm for 60 minutes under an environment at 60°C. After shaking, the mixture is filtered under an environment at 60°C, and the acid value of the filtrate is measured. The reduction rate of the acid value before and after the reaction is calculated as the fatty acid adsorption ratio per 1 g of the adsorbent.
Here, the term "during use" refers to the time during which use in the method for accelerating solidification in the present invention occurs and the time during which the solidification accelerating effect of the present invention is produced.
Regarding the fatty acid adsorption capability in the present invention, the fatty acid adsorption ratio in an average particle diameter during use of the silicate needs to be 8% or more, more preferably 9% or more, and further preferably 10% or more. It is considered that when the fatty acid adsorption ratio of the silicate in an average particle diameter during use is appropriate, the bound silicate and fatty acid are insolubilized in oil and fat to be solidified and become a crystal nucleus, which preferably accelerates solidification of the oil and fat. The method for measuring the acid value is performed in accordance with "Standard Methods for the Analysis of Fats, Oils and Related Materials" established by Japan Oil Chemists' Society.
In the solidification accelerator for oil and fat according to the present invention, the silicate usable in the above-described "method for accelerating solidification of oil and fat" is used.
The silicate of the present invention is preferably added in an amount of 0.05% by weight or more and 5.0% by weight or less with respect to oil and fat to be solidification-accelerated. This amount is more preferably 0.1% by weight or more and 4.0% by weight or less and further preferably 0.1% by weight or more and 3.0% by weight or less. When this addition amount is appropriate, the intended solidification of oil and fat can be preferably accelerated.

(Fatty acid)

In the method for accelerating solidification of oil and fat according to the present invention, a fatty acid needs to coexist. The fatty acid as described herein is not bound to glycerin but exists in a free state.
The free fatty acid according to the present invention is preferably in an amount of 0.01% by weight or more and 5.0% by weight or less with respect to oil and fat to be solidification-accelerated. This amount is more preferably 0.01% by weight or more and 4.5% by weight or less and further preferably 0.01% by weight or more and 4.2% by weight or less. When this fatty acid amount is appropriate, the intended solidification of oil and fat can be preferably accelerated.
A predetermined amount of the fatty acid may be all added separately to oil and fat to be solidification-accelerated, or an appropriate amount of fatty acid originally contained in oil and fat to be solidification-accelerated may be used. Furthermore, it is also possible to appropriately adjust the amount of fatty acid to be separately added, depending on the amount of fatty acid originally contained in oil and fat to be solidification-accelerated. The fatty acid as described in the present invention is a free fatty acid obtained by the arithmetic equation for a free fatty acid described in "Acid value" in "Standard Methods for the Analysis of Fats, Oils and Related Materials" established by Japan Oil Chemists' Society. That is, calculation can be performed according to "free fatty acid (% by weight) = acid value x f", and the coefficient of the main constituent fatty acid of each oil and fat is used as coefficient f. The detection limit of the fatty acid of the present invention is 0.002% by weight.
In the solidification accelerator for oil and fat according to the present invention, the fatty acid usable in the above-described "method for accelerating solidification of oil and fat" is used.
The free fatty acid according to the present invention may be either a saturated fatty acid or an unsaturated fatty acid. The fatty acid is preferably a saturated fatty acid having 12 to 24 carbon atoms and/or an unsaturated fatty acid having 12 to 24 carbon atoms, more preferably a saturated fatty acid having 12 to 24 carbon atoms, and further preferably a saturated fatty acid having 16 to 24 carbon atoms. It is preferable that the coexisting fatty acid is within the above-described range because the adsorptivity with the silicate is high and the intended solidification of oil and fat suitably tends to be significantly accelerated.

(Coexistence Ratio of Fatty Acid and Silicate)

In the method for accelerating solidification of oil and fat according to the present invention, the coexistence ratio of the free fatty acid to the silicate having a fatty acid adsorption capability (A/B ratio) is a value obtained by dividing the free fatty acid amount (A (% by weight)) by the silicate amount (B (% by weight)). The A/B ratio is preferably 0.001 or more and 50 or less, more preferably 0.005 or more and 50 or less, further preferably 0.01 or more and 48 or less, still more preferably 0.01 or more and 45 or less, and particularly preferably 0.05 or more and 40 or less. When the A/B ratio is within the above-described range, the intended solidification of oil and fat can be more preferably accelerated. The free fatty acid as described herein also includes the free fatty acid adsorbed to the silicate.

In the solidification accelerator for oil and fat according to the present invention, the A/B ratio usable in the above-described "method for accelerating solidification of oil and fat" is used.

(Miniaturization of Silicate)

The particle diameter of the silicate according to the present invention needs to be such a particle diameter that the fatty acid adsorption ratio in an average particle diameter during use is 8% or more. That is, the particle size is defined by the fatty acid adsorption capability of each silicate.

Examples of the miniaturization method for obtaining a predetermined particle size include dry pulverization and wet pulverization. In general, the average particle diameter during use of the silicate is preferably 500 $\mu$m or less, more preferably 300 $\mu$m or less, and further preferably 250 $\mu$m or less. The lower limit of the average particle size is not limited but suitably 0.1 $\mu$m or more from the viewpoint of energy loss when excessively miniaturized. When the average particle diameter during use is a preferable value, the fatty acid adsorption ratio of the silicate is also an appropriate value, and the intended solidification of oil and fat can be preferably accelerated. The average particle diameter as described herein is a median diameter (D50) obtained by measurement using SALD 2300 (manufactured by SHIMADZU).

(Types of Oil and Fat as well as Object That Can be Solidification-Accelerated)

The oil and fat to which the method for accelerating solidification of oil and fat according to the present invention is applicable is not particularly limited but preferably an oil and fat having a melting point of 10°C or higher. Examples thereof include natural solid fats such as palm oil, coconut oil, palm kernel oil, beef tallow, lard, milk fat, sal fat, shea fat, mango fat, kokum fat, illipe fat, and cacao fat, and those obtained by performing processing such as fractionation, curing, and transesterification using these fats as raw materials. In addition, hardened oil, fully hydrogenated oil, transesterification reaction oil, and the like can be used. Further, there can be used hardened oil or transesterification reaction oil in which the raw material is liquid oil such as soybean oil, rapeseed oil, sunflower oil, cottonseed oil, rice oil, rice bran oil, peanut oil, corn oil, safflower oil, olive oil, kapok oil, sesame oil, evening primrose oil, fish oil, and whale oil. Also, the oil and fat before purification can be used. In the present invention, one or two or more of these types of oil and fat can be used. The melting point as described in the present invention is the slipping point in "Standard Methods for the Analysis of Fats, Oils and Related Materials (I)" established by Japan Oil Chemists' Society.

(Solidification Accelerator for Oil and Fat)

In the present invention, an agent that contains a silicate having a fatty acid adsorption ratio of 8% or more in an average particle diameter during use can also be used as a "solidification accelerator for oil and fat". When a predetermined amount of fatty acid is not contained in oil and fat to be solidification-accelerated, an agent that contains a predetermined amount of fatty acid can also be used. The fatty acid in this case is preferably 1% by weight or more and 99% by weight or less, more preferably 1% by weight or more and 95% by weight or less, further preferably 1% by weight or more and 90% by weight or less, and still more preferably 3% by weight or more and 90% by weight or less. When this range is appropriate, the solidification of oil and fat can be preferably accelerated when the agent is added to oil and fat to be solidification-accelerated.

When the solidification accelerator for oil and fat according to the present invention contains a fatty acid, the A/B ratio is preferably 0.001 or more and 15 or less. This range is more preferably 0.001 or more and 13 or less and further preferably 0.005 or more and 10 or less. When this range is appropriate, the solidification of oil and fat can be preferably accelerated when the agent is added to oil and fat to be solidification-accelerated. When the solidification accelerator for oil and fat according to the present invention does not contain a fatty acid, the A/B ratio is, needless to say, 0.

The silicate contained in the solidification accelerator for oil and fat is preferably 1% by weight or more and 25% by weight or less, more preferably 5% by weight or more and 20% by weight or less, and further preferably 8% by weight or more and 20% by weight or less. When this range is appropriate, the solidification of oil and fat can be preferably accelerated when the agent is added to oil and fat to be solidification-accelerated.

(Utilization Method)

The method for accelerating solidification of oil and fat according to the present invention will be described. In the method for producing oil and fat which includes a solidification step in the production step and a fractionation step after the solidification step, the solidification of oil and fat to be solidification-accelerated is accelerated by using the method for accelerating solidification of oil and fat according to the present invention during the solidification step. This can shorten the time of the production step taken from the solidification step to the fractionation step. Specifically, the silicate having a fatty acid adsorption ratio of 8% or more in an average particle size during use and a free fatty acid are allowed to coexist in oil and fat to be solidification-accelerated in a molten state. The product is subsequently subjected to general solidification conditions such as cooling. Thereafter, the solid obtained in the solidification step is fractionated in the fractionation step to obtain an intended oil and fat product. The method of the fractionation step as described herein is not particularly limited. Examples thereof include solvent fractionation and dry fractionation without using a solvent.

In the method for accelerating solidification of oil and fat according to the present invention, the A/B ratio is preferably 0.001 or more and 50 or less with respect to oil and fat to be solidification-accelerated. Details of this ratio are as described above.

In the method for accelerating solidification of oil and fat according to the present invention, it is preferable that the silicate having a fatty acid adsorption ratio of 8% or more in an average particle diameter during use is added in an amount of 0.05% by weight or more and 5.0% by weight or less with respect to oil and fat to be solidification-accelerated. Details of this amount are as described above.

In the method for accelerating solidification of oil and fat according to the present invention, it is desirable that the amount of free fatty acid in oil and fat to be solidification-accelerated is 0.01% by weight or more and 5.0% by weight or less. Details of this amount are as described above.

When a predetermined amount of a free fatty acid is contained in oil and fat to be solidification-accelerated, the fatty acid amount to be separately added can be appropriately adjusted depending on the content of the free fatty acid.

(Use of Solidification Accelerator for Oil and Fat)

It is also possible to prepare an agent that contains the silicate according to the present invention and to use the agent as a "solidification accelerator for oil and fat". The use aspect of such an agent is also in accordance with the method for accelerating solidification of oil and fat according to the present invention.

(Evaluation of Solidification Accelerating Effect)

The solidification accelerating effect of oil and fat according to the present invention can be evaluated based on the solidification rate of oil and fat and the result of DSC measurement. More desirably, the effect can be evaluated based on the result of DSC measurement.

The solidification rate of oil and fat is calculated from a change in a solid fat content measured by SFC after melted oil and fat is solidified under certain temperature conditions. A higher solid fat content at a certain time point indicates a faster solidification rate of oil and fat. In the evaluation of the solidification rate in the present invention, the presence or absence of the solidification accelerating effect is determined from the speed of time until the solid fat content becomes half the end point. The SFC is the abbreviation for solid fat content, and the content of solid fat present in oil and fat at a constant temperature is measured with a nuclear magnetic resonance (NMR) apparatus.

The DSC measurement is the abbreviation for differential scanning calorimetry and is a thermal analysis method of measuring a difference in the amount of heat between a measurement sample and a reference substance to measure a solidification temperature, a melting point, a glass transition point, and the like. In the evaluation of DSC measurement in the present invention, the presence or absence of the solidification accelerating effect is determined from the rising temperature (solidification starting temperature) and the exothermic peak temperature of the exothermic peak when the sample is cooled at a constant rate or at a constant temperature.

(Examples)

Hereinafter, the present invention will be described in more detail. It is noted that the terms "part" and "%" in the text are on a weight basis unless otherwise stated.

<Examination 1>

(Solidification Method)

According to the formulation in Table 1, only a palmitic acid, a silicate and a palmitic acid, or only a silicate was allowed to coexist in purified palm oil completely melted at 60°C or higher. The oil and fat was completely melted at 60°C or higher again and then sufficiently mixed by a vortex mixer until the aggregate could not be visually confirmed. The obtained mixed liquid was immediately subjected to measurement of a solidification rate (SFC) and DSC measurement.

In the case of using a pulverized silicate, one pulverized according to "- Wet pulverization method for silicate" was used. Here, as an auxiliary agent used for pulverization, the same oil and fat as that used in the subsequent solidification test (for example, "purified palm oil") was used to adjust the amount of the silicate in oil and fat to be solidification-accelerated.

The free fatty acid amount in purified palm oil was calculated as a palmitic acid in accordance with the method described in "Acid Value" in "Standard Methods for the Analysis of Fats, Oils and Related Materials" established by Japan Oil Chemists' Society.


- Wet pulverization method of silicate

    1. To oil and fat to be solidification-accelerated which was warmed to 80°C and completely melted, a silicate to be pulverized and zirconia balls ($\varphi$ 3 mm) were added.
    2. Pulverization was performed at 1000 rpm for 60 minutes using a three-dimensional bead impact homogenizer (ShakeMaster AUTO (manufactured by Biomedical Science Inc.)).
    3. In a state of being completely melted at 80°C or higher, the supernatant was fractionated with a dropper and subjected to a test. The zirconia balls precipitated immediately after pulverization and came to be removed because the particle size was larger than the caliber of the pipette.


(Calculation Method of Fatty Acid Adsorption Ratio)

The fatty acid adsorption ratio was calculated by the following method. To purified palm oil formulated with 1% by weight of a palmitic acid as a substrate, 1% by weight of a silicate as an adsorbent was added. The mixture was shaken at 60°C for 60 minutes at 150 rpm. Thereafter, the mixture was filtered under an environment at 60°C, and the acid value of the filtrate was measured. The decrease amount of the acid value before and after the reaction was calculated as the fatty acid adsorption ratio per 1 g of the adsorbent.

For the silicate pulverized by the "- Wet pulverization method for silicate", adjustment was performed to have the formulation ratio required in the "Method for calculating fatty acid adsorption ratio" based on the addition amount at the time of the pulverization treatment, and then the fatty acid adsorption ratio was calculated.


(Measurement of Solidification Rate)

The mixed solution was melted under an environment at 85°C for 15 minutes and allowed to stand (stabilized) under an environment at 60°C for 30 minutes. The SFC was measured by NMR (minispec mq20 (manufactured by Bruker Japan K.K.)) every 4 minutes at a constant temperature of 25°C. Measurement was performed until the SFC change amount reached less than $\pm 0.5\%$ from 90 minutes to 120 minutes (maximum: 120 minutes). A point where the change amount in SFC after every 4 minutes was 0 was regarded as an end point, and an SFC value at the point was obtained. From the SFC curve, the time (hereinafter, referred to as crystallization half time) T(1/2) min until the SFC becomes half the end point was calculated. Then, the solidification rate ratio was calculated based on the crystallization half time, and the solidification accelerating effect was evaluated. The solidification rate ratio (relative value to unadded value) was calculated from the following equation.

$$\text{Solidification rate ratio} = \text{Test } T(1/2)/\text{Unadded Cont } T(1/2)$$

Test T(1/2) was defined as the crystallization half time of a mixed solution in which additives described in Examples or Comparative Examples were formulated.

Unadded Cont T(1/2) was defined as the crystallization half time of oil and fat in which additives and a fatty acid were not formulated.

The presence or absence of the solidification accelerating effect in SFC was evaluated based on the solidification rate ratio according to the following evaluation points.

0 point: Solidification rate ratio is less than 1.5 times (little influence on solidification)
1 point: Solidification rate ratio is 1.5 times or more (solidification acceleration)
2 points: Solidification rate ratio is 3 times or more (significant solidification acceleration)
3 points: Solidification rate ratio is 4 times or more (fairly significant solidification acceleration)
4 points: Solidification rate ratio is 5 times or more (very significant solidification acceleration)

(Measurement of DSC)

The change in the endothermic reaction of the mixed liquid was measured with 20 mg of a sample by DSC (DSC3+ (manufactured by Mettler Toledo Co.)) under a nitrogen atmosphere. An onset temperature (solidification starting temperature) and a peak temperature (exothermic peak temperature) during cooling were evaluated. The measurement temperature conditions were an initial temperature of 85°C (10 minutes), a cooling rate of 1°C/min, a minimum temperature of 0°C (10 minutes), a heating rate of 5°C/min, and a final temperature of 85°C.

The presence or absence of the solidification accelerating effect in DSC was evaluated based on the rising temperature according to the following evaluation points.

0 point: Change in solidification starting temperature or change in high-temperature side exothermic peak temperature is lower than 1°C (little influence on solidification)
1 point: Solidification starting temperature and high-temperature side exothermic peak temperature both increase by 1°C or higher (solidification acceleration)
2 points: Solidification starting temperature and high-temperature side exothermic peak temperature both increase by 3°C or higher (significant solidification acceleration)
3 points: Solidification starting temperature and high-temperature side exothermic peak temperature both increase by 5°C or higher (fairly significant solidification acceleration)
4 points: Solidification starting temperature and high-temperature side exothermic peak temperature both increase by 7°C or higher (very significant solidification acceleration)

(Evaluation Method)

A study sample having an evaluation of 2 points or more in the evaluation of either the solidification rate ratio or DSC was regarded as having the solidification accelerating effect and designated as acceptable.

| Formulation [% by weight] | | | Comparative Example 1-1 | Comparative Example 1-2 | Comparative Example 1-3 | Example 1-1 | Example 1-2 | Example 1-3 | Example 1-4 |
|---|---|---|---|---|---|---|---|---|---|
| Purified palm oil | | | 100 | 99 | 98 | 98 | 98 | 98 | 98 |
| | Silicate | Silicate A | - | - | 1 | - | - | - | - |
| | | Silicate B | - | - | - | 1 | - | - | - |
| | | Silicate C | - | - | - | - | 1 | - | - |
| | | Silicate D | - | - | - | - | - | 1 | - |
| | | Silicate E | - | - | - | - | - | - | 1 |
| | Palmitic acid | | - | 1 | 1 | 1 | 1 | 1 | 1 |
| Fatty acid content [% by weight] | | Purified palm oil-derived | 0.019 | 0.019 | 0.019 | 0.019 | 0.019 | 0.019 | 0.019 |
| | | Added | 0.000 | 1.000 | 1.000 | 1.000 | 1.000 | 1.000 | 1.000 |
| | | Total | 0.019 | 1.019 | 1.019 | 1.019 | 1.019 | 1.019 | 1.019 |
| A/B ratio in oil and fat | | | 0.000 | 0.000 | 1.019 | 1.019 | 1.019 | 1.019 | 1.019 |
| Solidification rate | Solidification rate ratio | | 1.0 | 0.8 | 1.3 | 2.7 | 2.5 | 2.4 | 2.5 |
| | Evaluation | | 0 | 0 | 0 | 1 | 1 | 1 | 1 |
| DSC | Change in solidification point starting temperature [°C] | | 0.0 | 0.3 | 1.6 | 3.0 | 3.9 | 3.0 | 3.3 |
| | Change in exothermic peak [°C] | | 0.0 | 0.5 | 1.2 | 3.2 | 3.3 | 3.5 | 3.6 |
| | Evaluation | | 0 | 0 | 1 | 2 | 2 | 2 | 2 |

| | | Example 1-5 | Example 1-6 | Comparative Example 1-4 | Comparative Example 1-5 | Comparative Example 1-6 | Example 1-7 | Example 1-8 |
|---|---|---|---|---|---|---|---|---|
| Formulation [% by weight] | Purified palm oil | 98 | 98 | 98 | 98 | 98 | 99 | 98 |
| | Silicate — Silicate F | - | - | - | - | - | - | - |
| | Silicate — Silicate G | - | - | - | - | - | - | - |
| | Silicate — Silicate H | - | - | 1 | - | - | - | - |
| | Silicate — Silicate I | - | - | - | 1 | - | - | - |
| | Silicate — Silicate J | - | - | - | - | 1 | - | - |
| | Silicate — Silicate K | - | - | - | - | - | 1 | 1 |
| | Palmitic acid | 1 | 1 | 1 | 1 | 1 | - | 1 |
| Fatty acid content [% by weight] | Purified palm oil-derived | 0.019 | 0.019 | 0.019 | 0.019 | 0.019 | 0.019 | 0.019 |
| | Added | 1.000 | 1.000 | 1.000 | 1.000 | 1.000 | 0.000 | 1.000 |
| | Total | 1.019 | 1.019 | 1.019 | 1.019 | 1.019 | 0.019 | 1.019 |
| A/B ratio in oil and fat | | 1.019 | 1.019 | 1.019 | 1.019 | 1.019 | 0.019 | 1.019 |
| Solidification rate | Solidification rate ratio | 2.2 | 2.7 | 0.9 | 0.9 | 2.3 | 3.0 | 5.4 |
| | Evaluation | 1 | 1 | 0 | 0 | 1 | 2 | 4 |
| DSC | Change in solidification point starting temperature [°C] | 3.0 | 3.0 | 0.1 | 0.7 | 2.9 | 2.3 | 7.1 |
| | Change in exothermic peak [°C] | 3.3 | 3.8 | 0.2 | 0.6 | 3.4 | 3.1 | 7.0 |
| | Evaluation | 2 | 2 | 0 | 0 | 1 | 1 | 4 |

| | | | Example 1-9 | Example 1-10 | Example 1-11 | Example 1-12 |
|---|---|---|---|---|---|---|
| Formulation [% by weight] | Purified palm oil | | 98 | 99 | 98 | 98 |
| | Silicate | Silicate L | 1 | - | - | - |
| | | Silicate M | - | 1 | 1 | - |
| | | Silicate N | - | - | - | 1 |
| | Palmitic acid | | 1 | - | 1 | 1 |
| Fatty acid content [% by weight] | Purified palm oil-derived | | 0.019 | 0.019 | 0.019 | 0.019 |
| | Added | | 1.000 | 0.000 | 1.000 | 1.000 |
| | Total | | 1.019 | 0.019 | 1.019 | 1.019 |
| A/B ratio in oil and fat | | | 1.019 | 0.019 | 1.019 | 1.019 |
| Solidification rate | Solidification rate ratio | | 4.7 | 3.0 | 4.4 | 3.3 |
| | Evaluation | | 3 | 2 | 3 | 2 |
| DSC+B2:K53 | Change in solidification point starting temperature [°C] | | 6.2 | 2.6 | 3.1 | 1.4 |
| | Change in exothermic peak [°C] | | 5.8 | 3.5 | 3.8 | 1.2 |
| | Evaluation | | 3 | 1 | 2 | 1 |

As silicate A, one obtained by wet-pulverizing "Silica Gel" manufactured by FUJIFILM Wako Pure Chemical Corporation was used (the average particle diameter after pulverization was 3 mm).

As silicate B, "Briskoil CAS-30S" which is calcium silicate manufactured by Tomita Pharmaceutical Co., Ltd. was used (average particle diameter: 120 μm).

As silicate C, "Florite R" which is calcium silicate manufactured by Tomita Pharmaceutical Co., Ltd. was used (average particle diameter: 20 μm).

As silicate D, "Briskoil MT" which is magnesium silicate manufactured by Tomita Pharmaceutical Co., Ltd. was used (average particle diameter: 150 μm).

As silicate E, "Briskoil SMD" which is magnesium silicate manufactured by Tomita Pharmaceutical Co., Ltd. was used (average particle diameter: 100 μm).

As silicate F, "Mizukalife F-2G" which is magnesium silicate manufactured by Mizusawa Industrial Chemicals, Ltd. was used (average particle diameter: 150 to 200 μm).

As silicate G. "Sylopute 71R" which is silicon dioxide manufactured by Fuji Silysia Chemical Ltd. was used (average particle diameter: 100 μm).

As silicate H, "Galleon Earth NVZ" which is activated clay manufactured by Mizusawa Chemical Industry Co., Ltd. was used (average particle diameter: 39 μm).

As silicate I, "Radiolite #100" which is diatomaceous earth manufactured by Showa Chemical Industry Co., Ltd. was used (average particle size: 20 μm).

As silicate J, "Food Additive Talc MS" which is talc manufactured by Nippon Talc Co., Ltd. was used (average particle size: 14 μm).

As silicate K, one obtained by wet-pulverizing silicate C was used (the average particle diameter after pulverization was 1.5 μm).

As silicate L, one obtained by wet-pulverizing silicate E under the same conditions as in silicate K was used (the average particle diameter after pulverization was 1.2 μm).

As silicate M, one obtained by wet-pulverizing silicate F under the same conditions as in silicate K was used (the average particle diameter after pulverization was 1.0 μm).

As silicate N, one obtained by wet-pulverizing silicate G under the same conditions as in silicate K was used (the average particle diameter after pulverization was 1.0 μm).

As a palmitic acid, a product manufactured by Kishida Chemical Co., Ltd. was used.

[Table 2]

| Type | Fatty acid adsorption ratio [%] |
|---|---|
| Silicate A | 0.5 |
| Silicate B | 73.4 |
| Silicate C | 51.1 |
| Silicate D | 32.4 |
| Silicate E | 25.5 |
| Silicate F | 10.0 |
| Silicate G | 8.7 |
| Silicate H | 0.5 |
| Silicate I | 0.5 |
| Silicate J | 1.4 |
| Silicate K | 51.5 |
| Silicate L | 29.2 |
| Silicate M | 13.7 |
| Silicate N | 8.3 |

(Results)

When only a palmitic acid was formulated to purified palm oil, which is oil and fat to be solidification-accelerated (Comparative Example 1-1), the solidification acceleration of the purified palm oil was not confirmed (Comparative Example 1-2). When a silicate and a palmitic acid were allowed to coexist in purified palm oil, solidification acceleration was not confirmed (Comparative Examples 1-3 to 1-5). When silicate J, for which the solidification accelerating effect is disclosed, and a palmitic acid were allowed to coexist, the solidification acceleration of purified palm oil was observed, but the effect was weak (Comparative Example 1-6).

On the other hand, when one of silicate B to silicate G and a palmitic acid were allowed to coexist in purified palm oil, significant solidification acceleration of the purified palm oil was confirmed (Examples 1-1 to 1-6). This effect exceeded the solidification accelerating effect of silicate J. The tendency of the results obtained by these solidification rates was similar in DSC evaluation.

When a wet-pulverized silicate and a palmitic acid were formulated, a significant solidification accelerating effect was exhibited (Examples 1-8, 1-9, 1-11, and 1-12). Even when only a wet-pulverized silicate was formulated in purified palm oil, solidification acceleration was confirmed (Examples 1-7 and 1-10).

Regarding the fatty acid adsorption ratio of each silicate, the fatty acid adsorption ratios of silicate A, silicate H, silicate I, and silicate J were all 2% or less. On the other hand, the fatty acid adsorption ratios of silicate B to silicate G were 8% or more, and the fatty acid adsorption ratio of silicate B was the highest. These silicates were subjected to a wet pulverization treatment to obtain silicate K to silicate N, and the fatty acid adsorption ratios of the silicate K to silicate N were also 8% or more.

(Consideration)

It was considered that the solidification accelerating effect obtained when a silicate and a palmitic acid were allowed to coexist in oil and fat to be solidification-accelerated is related to the fatty acid adsorption ratio of the silicate, and that a higher fatty acid adsorption ratio of a silicate tends to accelerate the solidification of oil and fat.

<Examination 2>

(Solidification Method)

The solidification method followed Examination 1 and was performed according to the formulation in Table 3.

(Evaluation Method)

The evaluation method followed Examination 1.

[Table 3]

| | | | Comparative Example 2-1 | Comparative Example 2-2 | Comparative Example 2-3 | Comparative Example 2-4 | Comparative Example 2-5 |
|---|---|---|---|---|---|---|---|
| Formulation [% by weight] | Purified palm oil | | 99 | 99 | 99 | 99 | 99 |
| | Silicate K | | - | - | - | - | - |
| | Fatty acid | Lauric acid | 1 | - | - | - | - |
| | | Stearic acid | - | 1 | - | - | - |
| | | Oleic acid | - | - | 1 | - | - |
| | | Arachidic acid | - | - | - | 1 | - |
| | | Behenic acid | - | - | - | - | 1 |
| Fatty acid content [% by weight] | | Purified palm oil-derived | 0.019 | 0.019 | 0.019 | 0.019 | 0.019 |
| | | Added | 1.000 | 1.000 | 1.000 | 1.000 | 1.000 |
| | | Total | 1.019 | 1.019 | 1.019 | 1.019 | 1.019 |
| A/B ratio in oil and fat | | | 0.000 | 0.000 | 0.000 | 0.000 | 0.000 |
| Solidification rate | Solidification rate ratio | | 0.9 | 0.9 | 1.0 | 0.9 | 1.0 |
| | Evaluation | | 0 | 0 | 0 | 0 | 0 |
| DSC | Change in solidification point starting temperature [°C] | | 0.2 | 0.4 | 0.2 | 0.7 | 0.9 |
| | Change in exothermic peak [°C] | | 0.2 | 0.6 | 0.1 | 0.9 | 0.8 |
| | Evaluation | | 0 | 0 | 0 | 0 | 0 |

(continued)

| | | | Example 2-1 | Example 2-2 | Example 2-3 | Example 2-4 | Example 2-5 |
|---|---|---|---|---|---|---|---|
| Formulation [% by weight] | Purified palm oil | | 98 | 98 | 98 | 98 | 98 |
| | Silicate K | | 1 | 1 | 1 | 1 | 1 |
| | Fatty acid | Lauric acid | 1 | - | - | - | - |
| | | Stearic acid | - | 1 | - | - | - |
| | | Oleic acid | - | - | 1 | - | - |
| | | Arachidic acid | - | - | - | 1 | - |
| | | Behenic acid | - | - | - | - | 1 |
| Fatty acid content [% by weight] | | Purified palm oil-derived | 0.019 | 0.019 | 0.019 | 0.019 | 0.019 |
| | | Added | 1.000 | 1.000 | 1.000 | 1.000 | 1.000 |
| | | Total | 1.019 | 1.019 | 1.019 | 1.019 | 1.019 |
| A/B ratio in oil and fat | | | 1.019 | 1.019 | 1.019 | 1.019 | 1.019 |
| Solidification rate | Solidification rate ratio | | 3.6 | 5.0 | 3.9 | 5.0 | 4.9 |
| | Evaluation | | 2 | 4 | 2 | 4 | 3 |
| DSC | Change in solidification point starting temperature [°C] | | 3.6 | 6.7 | 3.6 | 5.6 | 4.1 |
| | Change in exothermic peak [°C] | | 4.3 | 6.7 | 4.2 | 5.8 | 4.4 |
| | Evaluation | | 2 | 3 | 2 | 3 | 2 |

As a lauric acid, stearic acid, oleic acid, arachidic acid, and behenic acid, products manufactured by Kishida Chemical Co., Ltd. were used.

(Results)

When only a free fatty acid was formulated in purified palm oil, solidification acceleration of the purified palm oil was not confirmed (Comparative Examples 2-1 to 2-5). On the other hand, when a free fatty acid was allowed to coexist together with silicate K having a high fatty acid adsorption ratio in purified palm oil, significant solidification acceleration was observed (Examples 2-1 to 2-5).

<Examination 3>

(Solidification Method)

The solidification method followed Examination 1 and was performed according to the formulation in Table 4. Purified palm oil from which a fatty acid was removed was prepared as follows. Sylopute 71R (manufactured by Fuji Silysia Chemical Ltd.) was added in an amount of 10% by weight to purified palm oil. The mixture was stirred at 60°C for 60 minutes and thereafter filtered off under an environment at 60°C. This filtrate was used as purified palm oil from which a fatty acid was removed, and the fatty acid content was 0.000%.

(Evaluation Method)

The evaluation method followed Examination 1.

[Table 4]

| | | | Comparative Example 3-1 | Comparative Example 3-2 | Comparative Example 3-3 | Comparative Example 3-4 | Example 3-1 | Example 3-2 | Example 3-3 | Example 3-4 | Example 3-5 |
|---|---|---|---|---|---|---|---|---|---|---|---|
| Formulation [% by weight] | Purified palm oil | | 100 | - | 96 | - | 99.9 | 99.8 | 98.9 | 95.9 | 99 |
| | Fatty acid-removed purified palm oil | | - | 100 | - | 99.9 | - | - | - | - | - |
| | Silicate K | | - | - | - | 0.1 | 0.1 | 0.1 | 0.1 | 0.1 | 0.5 |
| | Palmitic acid | | - | - | 4 | - | - | 0.1 | 1 | 4 | 0.5 |
| Fatty acid content [% by weight] | | Palm oil-derived | 0.019 | 0.000 | 0.018 | 0.000 | 0.019 | 0.019 | 0.019 | 0.018 | 0.019 |
| | | Added | 0.000 | 0.000 | 4.000 | 0.000 | 0.000 | 0.100 | 1.000 | 4.000 | 0.500 |
| | | Total | 0.019 | 0.000 | 4.018 | 0.000 | 0.019 | 0.119 | 1.019 | 4.018 | 0.519 |
| A/B ratio in oil and fat | | | 0.000 | 0.000 | 0.000 | 0.000 | 0.190 | 1.190 | 10.188 | 40.182 | 1.038 |
| Solidification rate | Solidification rate ratio | | 1.0 | 1.0 | 0.5 | 1.3 | 1.8 | 3.1 | 3.5 | 3.4 | 5.4 |
| | Evaluation | | 0 | 0 | 0 | 0 | 1 | 2 | 2 | 2 | 4 |
| DSC | Change in solidification point starting temperature [°C] | | 0.0 | -0.1 | 0.8 | 1.7 | 3.1 | 5.6 | 5.7 | 5.9 | 6.7 |
| | Change in exothermic peak [°C] | | 0.0 | -0.1 | 1.2 | 2 | 3.1 | 4.6 | 3.9 | 4.3 | 6.4 |
| | Evaluation | | 0 | 0 | 0 | 1 | 2 | 2 | 2 | 2 | 3 |
| | | | Example 3-6 | Example 3-7 | Example 3-8 | Example 3-9 | Example 3-10 | Example 3-11 | Example 3-12 | Example 3-13 | Example 3-14 |
| Formulation [% by weight] | Purified palm oil | | 98.995 | 98.99 | 98.975 | 98.95 | 98.925 | 98.9 | 98.7 | 98 | 97 |
| | Silicate K | | 1 | 1 | 1 | 1 | 1 | 1 | 1 | 1 | 1 |
| | Palmitic acid | | 0.005 | 0.010 | 0.025 | 0.05 | 0.075 | 0.1 | 0.3 | 1 | 2 |

(continued)

| | | Example 3-6 | Example 3-7 | Example 3-8 | Example 3-9 | Example 3-10 | Example 3-11 | Example 3-12 | Example 3-13 | Example 3-14 |
|---|---|---|---|---|---|---|---|---|---|---|
| Fatty acid content [% by weight] | Palm oil-derived | 0.019 | 0.019 | 0.019 | 0.019 | 0.019 | 0.019 | 0.019 | 0.019 | 0.018 |
| | Added | 0.005 | 0.010 | 0.025 | 0.050 | 0.075 | 0.100 | 0.300 | 1.000 | 2.000 |
| | Total | 0.024 | 0.029 | 0.044 | 0.069 | 0.094 | 0.119 | 0.319 | 1.019 | 2.018 |
| A/B ratio in oil and fat | | 0.024 | 0.029 | 0.044 | 0.069 | 0.094 | 0.119 | 0.319 | 1.019 | 2.018 |
| Solidification rate | Solidification rate ratio | 3.7 | 4.1 | 4.3 | 4.2 | 4.5 | 4.6 | 6.0 | 5.4 | 5.1 |
| | Evaluation | 2 | 3 | 3 | 3 | 3 | 3 | 4 | 4 | 4 |
| DSC | Change in solidification point starting temperature [°C] | 3.6 | 4.0 | 4.5 | 4.7 | 4.9 | 5.2 | 6.1 | 7.1 | 6.9 |
| | Change in exothermic peak [°C] | 2.7 | 3.3 | 3.9 | 4.2 | 4.4 | 4.8 | 6.0 | 7.0 | 7.2 |
| | Evaluation | 1 | 2 | 2 | 2 | 2 | 2 | 3 | 4 | 3 |
| | | Example 3-15 | Example 3-16 | Example 3-17 | Example 3-18 | Example 3-19 | Example 3-20 | Example 3-21 | Example 3-22 | Example 3-23 |
| Formulation [% by weight] | Purified palm oil | 95 | 96 | 92 | 97.95 | 97.9 | 97.8 | 97.5 | 97 | 96 |
| | Silicate K | 1 | 4 | 4 | 2 | 2 | 2 | 2 | 2 | 2 |
| | Palmitic acid | 4 | - | 4 | 0.05 | 0.1 | 0.2 | 0.5 | 1 | 2 |
| Fatty acid content [% by weight] | Palm oil-derived | 0.018 | 0.018 | 0.017 | 0.019 | 0.019 | 0.019 | 0.019 | 0.018 | 0.018 |
| | Added | 4.000 | 0.000 | 4.000 | 0.050 | 0.100 | 0.200 | 0.500 | 1.000 | 2.000 |
| | Total | 4.018 | 0.018 | 4.017 | 0.069 | 0.119 | 0.219 | 0.519 | 1.018 | 2.018 |
| A/B ratio in oil and fat | | 4.018 | 0.005 | 1.004 | 0.034 | 0.059 | 0.109 | 0.259 | 0.509 | 1.009 |

(continued)

| | | Example 3-15 | Example 3-16 | Example 3-17 | Example 3-18 | Example 3-19 | Example 3-20 | Example 3-21 | Example 3-22 | Example 3-23 |
|---|---|---|---|---|---|---|---|---|---|---|
| Solidification rate | Solidification rate ratio | 5.1 | 3.3 | 7.0 | 4.7 | 4.9 | 5.1 | 5.4 | 5.7 | 6.4 |
| | Evaluation | 4 | 2 | 4 | 3 | 3 | 4 | 4 | 4 | 4 |
| DSC | Change in solidification point starting temperature [°C] | 8.2 | 2.4 | 10.6 | 5.9 | 6.1 | 6.5 | 6.8 | 7.1 | 7.4 |
| | Change in exothermic peak [°C] | 7.8 | 3.9 | 8.7 | 5.3 | 5.8 | 6.2 | 6.7 | 7.0 | 7.2 |
| | Evaluation | 4 | 1 | 4 | 3 | 3 | 3 | 3 | 4 | 4 |

(Results)

As compared with purified palm oil in which silicate K and a palmitic acid were not added (Comparative Example 3-1), the solidification acceleration of purified palm oil from which a fatty acid was removed was not confirmed (Comparative Example 3-2). Further, when only a palmitic acid was added to purified palm oil, solidification acceleration was not observed either (Comparative Example 3-3).

Solidification acceleration of oil and fat was not confirmed when silicate K was added to purified palm oil from which a fatty acid was removed (Comparative Example 3-4), whereas the solidification acceleration was confirmed when silicate K was added to purified palm oil (Example 3-1).

When a predetermined amount of silicate K and palmitic acid, or silicate K, was added to purified palm oil and allowed to coexist in the purified palm oil at a predetermined ratio, significant solidification acceleration of the purified palm oil was confirmed (Examples 3-2 to 3-23). In particular, when the formulation amount of silicate K was 1% by weight or more, fairly significant solidification acceleration was observed. Also, when the total fatty acid content was 0.029% by weight or more, the solidification accelerating effect was large.

<Examination 4>

(Solidification Method)

The solidification method followed Examination 1 and was performed according to the formulation in Table 5. The free fatty acid content in oil and fat was calculated in the same manner as in Examination 1, and the free fatty acid amount was calculated as an oleic acid for all of cacao butter, purified cacao butter, and cacao mass extracted oil.

(Evaluation Method)

In the measurment of the solidification rate in this study, the end point of SFC was not obtained within the set time, and thus only DSC was evaluated, and those having 2 points or more in evaluation points were regarded as acceptable.

| | | Comparative Example 4-1 | Example 4-1 | Comparative Example 4-2 | Example 4-2 | Comparative Example 4-3 | Example 4-3 |
|---|---|---|---|---|---|---|---|
| Type of oil and fat | | Cacao butter | | Purified cacao butter | | Cacao mass extracted oil | |
| Formulation [% by weight] | Oil and fat | 100 | 98 | 100 | 98 | 100 | 99 |
| | Palmitic acid | - | 1 | - | 1 | - | - |
| | Silicate K | - | 1 | - | 1 | - | 1 |
| Fatty acid content [% by weight] | Oil and fat-derived | 0.170 | 0.167 | 0.020 | 0.020 | 1.370 | 1.356 |
| | Added | 0.000 | 1.000 | 0.000 | 1.000 | 0.000 | 0.000 |
| | Total | 0.170 | 1.167 | 0.020 | 1.020 | 1.370 | 1.356 |
| A/B ratio in oil and fat | | 0.000 | 1.167 | 0.000 | 1.020 | 0.000 | 1.356 |
| DSC evaluation | Change in solidification starting temperature [°C] | 0.0 | 3.1 | 0.0 | 3.3 | 0.0 | 3.1 |
| | Change in exothermic peak temperature [°C] | 0.0 | 3.3 | 0.0 | 3.3 | 0.0 | 3.2 |
| | Evaluation | 0 | 2 | 0 | 2 | 0 | 2 |

As cacao butter, "Cocoa Butter 201" manufactured by Fuji Oil Co., Ltd. was used.

As purified cacao butter, one obtained by purifying "Cocoa Butter 201" manufactured by Fuji Oil Co., Ltd. according to a conventional method was used.

As cacao mass extracted oil, a filtrate obtained by filtering "GB100" manufactured by Fuji Oil Co., Ltd. through filter paper (No. 5C) was used.

(Results)

When silicate K and a palmitic acid were allowed to coexist in cacao butter which contains a free fatty acid and purified cacao butter from which most of the free fatty acid was removed by purifying the cacao butter, significant solidification acceleration was observed (Examples 4-1 and 4 -2). It was revealed that when a silicate having a fatty acid adsorption capability and a palmitic acid are allowed to coexist in oil and fat to be solidification-accelerated, the solidification accelerating effect can be obtained regardless of the presence or absence of a free fatty acid in oil and fat.

When only silicate K was formulated to cacao mass extracted oil in cacao mass extracted oil which originally contains a free fatty acid in oil and fat, significant solidification acceleration of cacao mass was confirmed (Example 4-3). It can be said that this result demonstrates that when a free fatty acid is present in oil and fat to be solidification-accelerated, and a silicate having a fatty acid adsorption capability is formulated to the oil and fat to be solidification-accelerated, solidification of the oil and fat can also be accelerated.

<Examination 5>

(Solidification Method)

The solidification method followed Examination 1 and was performed according to the formulation in Table 6. The fatty acid content in oil and fat was calculated in the same manner as in Examination 1. The free fatty acid amount was calculated with CBE as an oleic acid, palm middle melting point oil and transesterification reaction oil as a palmitic acid, and coconut oil and laurin butter as a lauric acid.

(Evaluation Method)

The evaluation method followed Examination 3.

[Table 6]

| | | Comparative Example 5-1 | Example 5-1 | Comparative Example 5-2 | Example 5-2 | Comparative Example 5-3 | Example 5-3 |
|---|---|---|---|---|---|---|---|
| Formulation [% by weight] | CBE | 100 | 98 | - | - | - | - |
| | Palm middle melting point oil | - | - | 100 | 98 | - | - |
| | Coconut oil | - | - | - | - | 100 | 98 |
| | Silicate K | - | 1 | - | 1 | - | 1 |
| | Palmitic acid | - | 1 | - | 1 | - | 1 |
| Fatty acid content [% by weight] | Oil and fat-derived | 0.020 | 0.020 | 0.020 | 0.020 | 0.020 | 0.020 |
| | Added | 0.000 | 1.000 | 0.000 | 1.000 | 0.000 | 1.000 |
| | Total | 0.020 | 1.020 | 0.020 | 1.020 | 0.020 | 1.020 |
| A/B ratio in oil and fat | | 0.000 | 1.020 | 0.000 | 1.020 | 0.000 | 1.020 |
| DSC evaluation | Change in solidification starting temperature [°C] | 0.0 | 3.4 | 0.0 | 5.5 | 0.0 | 6.8 |
| | Change in exothermic peak temperature [°C] | 0.0 | 3.3 | 0.0 | 5.2 | 0.0 | 8.0 |
| | Evaluation | 0 | 2 | 0 | 3 | 0 | 3 |
| | | Comparative Example 5-4 | Example 5-4 | Comparative Example 5-5 | | Example 5-5 | |
| Formulation [% by weight] | Laurin butter | 100 | 98 | - | | - | |
| | Transesterification reaction oil | - | - | 100 | | 98 | |
| | Silicate K | - | 1 | - | | 1 | |
| | Palmitic acid | - | 1 | - | | 1 | |
| Fatty acid content [% by weight] | Oil and fat-derived | 0.020 | 0.020 | 0.020 | | 0.020 | |
| | Added | 0.000 | 1.000 | 0.000 | | 1.000 | |
| | Total | 0.020 | 1.020 | 0.020 | | 1.020 | |
| A/B ratio in oil and fat | | 0.000 | 1.020 | 0.000 | | 1.020 | |

(continued)

| DSC evaluation | | Comparative Example 5-4 | Example 5-4 | Comparative Example 5-5 | Example 5-5 |
|---|---|---|---|---|---|
| | Change in solidification starting temperature [°C] | 0.0 | 7.5 | 0.0 | 4.7 |
| | Change in exothermic peak temperature [°C] | 0.0 | 10.4 | 0.0 | 3.6 |
| | Evaluation | 0 | 4 | 0 | 2 |

As cocoa butter equivalent (CBE), "Melano NEW.SS -7" manufactured by Fuji Oil Co., Ltd. was used.

As palm middle melting point oil, "Unishort MJ" manufactured by Fuji Oil Co., Ltd. was used.

As coconut oil, "Refined Coconut Oil" manufactured by Fuji Oil Co., Ltd. was used.

As laurin butter, "Palkena H" manufactured by Fuji Oil Co., Ltd. was used.

As transesterification reaction oil, "Melano NT-R" manufactured by Fuji Oil Co., Ltd. was used.

(Results)

As compared with the case where silicate K and a palmitic acid did not coexist in oil and fat (Comparative Examples 5-1 to 5-5), solidification acceleration of oil and fat was confirmed when silicate K and a palmitic acid coexisted in oil and fat (Examples 5-1 to 5-5). It was revealed that the solidification accelerating effect attributable to coexistence of a silicate having a fatty acid adsorption capability and a fatty acid in oil and fat to be solidification-accelerated can be used for various types of oil and fat.

<Examination 6>

(Preparation of Solidification Accelerator)

Solidification accelerators of Examination Sample 1 to Examination Sample 5 were prepared. The concentrations of silicate K and a palmitic acid in each study sample are shown in Table 7.

(Examination Sample 1)

The same oil and fat as oil and fat to be solidification-accelerated was separately prepared. Two parts by weight of silicate C was added to 98 parts by weight of purified palm oil completely melted at 80°C or higher and, after complete melting at 80°C or higher, pulverized under an environment at 80°C according to "- Wet pulverization method for silicate" in Examination 1. The pulverized solution was centrifuged (at 3000 x g for 30 minutes), and 80 parts by weight of the supernatant was removed with a dropper. Twenty parts by weight of the residue which contains the precipitate was used as a solidification accelerator of Examination Sample 1.

(Examination Sample 2)

The same oil and fat as oil and fat to be solidification-accelerated was separately prepared. Two parts by weight of silicate C was added to 98 parts by weight of purified palm oil completely melted at 80°C or higher and, after complete melting at 80°C or higher, pulverized under an environment at 80°C according to "- Wet pulverization method for silicate" in Examination 1. The pulverized solution was centrifuged (at 3000 x g for 30 minutes), and 90 parts by weight of the supernatant was removed with a dropper. Ten parts by weight of the residue which contains the precipitate was used as a solidification accelerator of Examination Sample 2.

(Examination Sample 3)

The same oil and fat as oil and fat to be solidification-accelerated was separately prepared. Two parts by weight of silicate C was added to 98 parts by weight of purified palm oil completely melted at 80°C or higher and, after complete melting at 80°C or higher, pulverized under an environment at 80°C according to "- Wet pulverization method for silicate" in Examination 1. The pulverized solution was centrifuged (at 3000 xg for 30 minutes), and 82 parts by weight of the supernatant was removed with a dropper. Eighteen parts by weight of the residue which contains the precipitate was added with 2 parts by weight of a palmitic acid to make a total of 20 parts by weight. The palmitic acid was dissolved at 80°C or higher. The solution was mixed by a vortex mixer and used as a solidification accelerator of Examination Sample 3.

(Examination Sample 4)

The same oil and fat as oil and fat to be solidification-accelerated was separately prepared. Two parts by weight of silicate C was added to 98 parts by weight of purified palm oil completely melted at 80°C or higher and, after complete melting at 80°C or higher, pulverized under an environment at 80°C according to "- Wet pulverization method for silicate" in Examination 1. The pulverized solution was centrifuged (at 3000 xg for 30 minutes), and 92 parts by weight of the supernatant was removed with a dropper. Eight parts by weight of the residue which contains the precipitate was added with 2 parts by weight of a palmitic acid to make a total of 10 parts by weight. The palmitic acid was dissolved at 80°C or higher. The solution was mixed by a vortex mixer and used as a solidification accelerator of Examination Sample 4.

(Examination Sample 5)

Two parts by weight of silicate C was added to 98 parts by weight of a palmitic acid completely melted at 80°C or higher and pulverized under an environment at 80°C according to "- Wet pulverization method of silicate" in Examination 1. The pulverized solution was centrifuged (at 3000 x g for 30 minutes), and 80 parts by weight of the supernatant was removed with a dropper. Twenty parts by weight of the residue which contains the precipitate was used as a solidification accelerator of Examination Sample 5.

(Examination Samples 6 to 8)

A solidification accelerator having the same concentration as that of Examination Sample 4 was prepared using coconut oil, cacao mass extracted oil, and transesterification reaction oil.

[Table 7]

| | | Examination Sample 1 | Examination Sample 2 | Examination Sample 3 | Examination Sample 4 | Examination Sample 5 | Examination Sample 6 | Examination Sample 7 | Examination Sample 8 |
|---|---|---|---|---|---|---|---|---|---|
| Formulation [% by weight] | Silicate K | 10 | 20 | 10 | 20 | 10 | 20 | 20 | 20 |
| | Palmitic acid | - | - | 10 | 20 | 90 | 20 | 20 | 20 |
| | Purified palm oil | 90 | 80 | 80 | 60 | - | - | - | - |
| | Coconut oil | - | - | - | - | - | 60 | - | - |
| | Cacao mass extracted oil | - | - | - | - | - | - | 60 | - |
| | Transesterification reaction oil | - | - | - | - | - | - | - | 60 |
| A/B ratio of solidification accelerator | | 0.002 | 0.001 | 1.122 | 1.001 | 9.000 | 1.001 | 1.001 | 1.001 |

(Solidification Method)

According to the formulation in Table 8, oil and fat completely melted at 80°C or higher and a solidification accelerator were mixed and completely melted at 80°C or higher. The product was sufficiently mixed by a vortex mixer until the aggregate could not be visually confirmed. The obtained mixed liquid was immediately subjected to measurement of a solidification rate (SFC) and DSC measurement.

(Evaluation Method)

The evaluation method followed Examination 1. In the study on the formulation of the solidification accelerator into various types of oil and fat, the end point of SFC was not obtained within the set time in the measurement of the solidification rate, and thus only DSC was evaluated, and those having 2 points or more in evaluation points were regarded as acceptable.

[Table 8]

| | | | Comparative Example 6-1 | Example 6-1 | Example 6-2 | Example 6-3 | Example 6-4 | Example 6-5 |
|---|---|---|---|---|---|---|---|---|
| Formulation [% by weight] | Purified palm oil | | 100 | 99 | 95 | 99.5 | 99 | 95 |
| | Solidification accelerator | Examination Sample 1 | - | 1 | 5 | - | - | - |
| | | Examination Sample 2 | - | - | - | 0.5 | 1 | 5 |
| Fatty acid content [% by weight] | Purified palm oil-derived | | 0.019 | 0.019 | 0.018 | 0.019 | 0.019 | 0.018 |
| | Added | | 0.000 | 0.000 | 0.001 | 0.000 | 0.000 | 0.001 |
| | Total | | 0.019 | 0.019 | 0.019 | 0.019 | 0.019 | 0.019 |
| A/B ratio in oil and fat | | | 0.000 | 0.190 | 0.038 | 0.190 | 0.095 | 0.019 |
| Solidification rate | Solidification rate ratio | | 1.0 | 1.8 | 3.2 | 1.8 | 1.8 | 3.6 |
| | SFC evaluation | | 1 | 1 | 2 | 1 | 1 | 2 |
| DSC | Change in solidification starting temperature [°C] | | 0.0 | 3.2 | 3.1 | 3.0 | 3.4 | 3.4 |
| | Change in exothermic peak temperature [°C] | | 0.0 | 3.1 | 2.9 | 3.0 | 3.1 | 2.9 |
| | DSC evaluation | | 0 | 2 | 1 | 2 | 2 | 1 |

| | | | Example 6-6 | Example 6-7 | Example 6-8 | Example 6-9 | Example 6-10 | Example 6-11 | Example 6-12 |
|---|---|---|---|---|---|---|---|---|---|
| Formulation [% by weight] | Purified palm oil | | 99 | 95 | 99.5 | 99 | 95 | 99 | 95 |
| | Solid ification accelerator | Examination Sample 3 | 1 | 5 | - | - | - | - | - |
| | | Examination Sample 4 | - | - | 0.5 | 1 | 5 | - | - |
| | | Examination Sample 5 | - | - | - | - | - | 1 | 5 |

EP 4 345 154 A1

| | | Example 6-6 | Example 6-7 | Example 6-8 | Example 6-9 | Example 6-10 | Example 6-11 | Example 6-12 |
|---|---|---|---|---|---|---|---|---|
| Fatty acid content [% by weight] | Purified palm oil-derived | 0.019 | 0.018 | 0.019 | 0.019 | 0.018 | 0.019 | 0.018 |
| | Added | 0.100 | 0.501 | 0.100 | 0.200 | 1.001 | 0.900 | 4.500 |
| | Total | 0.119 | 0.519 | 0.119 | 0.219 | 1.019 | 0.919 | 4.518 |
| A/B ratio in oil and fat | | 1.190 | 1.038 | 1.190 | 1.095 | 1.019 | 9.188 | 9.036 |
| Solidification rate | Solidification rate ratio | 3.1 | 5.3 | 3.0 | 3.4 | 5.3 | 3.5 | 6.2 |
| | SFC evaluation | 2 | 4 | 2 | 2 | 4 | 2 | 4 |
| DSC | Change in solidification starting temperature [°C] | 5.5 | 6.5 | 5.1 | 5.9 | 6.9 | 5.6 | 6.8 |
| | Change in exothermic peak temperature [°C] | 4.5 | 6.5 | 3.8 | 4.7 | 6.7 | 3.6 | 6.6 |
| | DSC evaluation | 2 | 3 | 2 | 2 | 3 | 2 | 3 |

| | | | Comparative Example 6-2 | Example 6-13 | Comparative Example 6-3 | Example 6-14 | Comparative Example 6-4 | Example 6-15 |
|---|---|---|---|---|---|---|---|---|
| Formulation [% by weight] | Oil and fat | Coconut oil | 100 | 95 | - | - | - | - |
| | | Cacao mass extracted oil | - | - | 100 | 95 | - | - |
| | | Transesterification reaction oil | - | - | - | - | 100 | 95 |
| | Solidification accelerator | Examination Sample 6 | - | 5 | - | - | - | - |
| | | Examination Sample 7 | - | - | - | 5 | - | - |
| | | Examination Sample 8 | - | - | - | - | - | 5 |
| Fatty acid content [% by weight] | Oil and fat-derived | | 0.019 | 0.018 | 0.019 | 0.018 | 0.019 | 0.018 |
| | Added | | 0.000 | 1.001 | 0.000 | 1.001 | 0.000 | 1.001 |
| | Total | | 0.019 | 1.019 | 0.019 | 1.019 | 0.019 | 1.019 |

EP 4 345 154 A1

| | | Comparative Example 6-2 | Example 6-13 | Comparative Example 6-3 | Example 6-14 | Comparative Example 6-4 | Example 6-15 |
|---|---|---|---|---|---|---|---|
| A/B ratio in oil and fat | | 0.000 | 1.019 | 0.000 | 1.019 | 0.000 | 1.019 |
| Evaluation (DSC) | Change in solidification starting temperature [°C] | 0.0 | 6.8 | 0.0 | 3.7 | 0.0 | 4.9 |
| | Change in exothermic peak temperature [°C] | 0.0 | 8.1 | 0.0 | 3.3 | 0.0 | 3.7 |
| | Evaluation | 0 | 3 | 0 | 2 | 0 | 2 |

(Results)

As compared with the case where no solidification accelerator was formulated (Comparative Example 6-1), solidification acceleration of purified palm oil was confirmed when Examination Sample 1 or 2, which is a solidification accelerator that contains silicate K, was formulated in purified palm oil (Examples 6-1 to 6-5). Also, when Sample 3 or 4, which is a solidification accelerator that contains silicate K and a palmitic acid, was formulated in purified palm oil, the solidification acceleration of the purified palm oil was confirmed (Examples 6-6 to 6-10). Further, when a solidification accelerator that contains only silicate K and a palmitic acid, as in Examination Sample 5, was formulated in purified palm oil, solidification acceleration was confirmed (Examples 6-11 and 6-12).

When Samples 6 to 8, which are solidification accelerators that contain silicate K and a palmitic acid, were formulated in various types of oil and fat, the solidification acceleration of the oil and fat was confirmed (Examples 6-13 to 6-15), as compared with the cases of no formulation (Comparative Examples 6-2 to 6-4).

The solidification accelerator as described in the present invention, which contains a silicate having a fatty acid adsorption capability and a fatty acid, only has to be added to oil and fat to be solidification-accelerated in order to accelerate the solidification of the oil and fat. The solidification accelerating effect during use of the solidification accelerator has an effect similar to that obtained when a silicate and a fatty acid are allowed to coexist directly in oil and fat to be solidification-accelerated, and a solidification accelerator for oil and fat capable of simply accelerating solidification can be provided.

**Claims**

1. A method for accelerating solidification of oil and fat, comprising allowing (A) and (B) below to coexist in oil and fat to be solidification-accelerated:

   (A) a silicate having a fatty acid adsorption ratio of 8% or more in an average particle diameter during use; and
   (B) a free fatty acid in an amount of 0.01% by weight or more and 5.0% by weight or less in oil and fat.

2. The method for accelerating solidification of oil and fat according to claim 1, wherein the free fatty acid is a saturated fatty acid having 12 to 24 carbon atoms.

3. The method for accelerating solidification of oil and fat according to claim 1, wherein the free fatty acid is an unsaturated fatty acid having 12 to 24 carbon atoms.

4. The method for accelerating solidification of oil and fat according to claim 1, wherein the free fatty acid is a mixture of a saturated fatty acid having 12 to 24 carbon atoms and an unsaturated fatty acid having 12 to 24 carbon atoms.

5. The method for accelerating solidification of oil and fat according to any one of claims 1 to 4, wherein the silicate is amorphous silica.

6. The method for accelerating solidification of oil and fat according to any one of claims 1 to 5, wherein a coexistence ratio of the free fatty acid and the silicate (A/B ratio) is 0.001 or more and 50 or less, provided that A indicates the free fatty acid (% by weight), and B indicates the silicate amount (% by weight).

7. The method for accelerating solidification of oil and fat according to any one of claims 1 to 6, wherein the silicate is added in an amount of 0.05% by weight or more and 5.0% by weight or less with respect to the oil and fat to be solidification-accelerated.

8. A solidification accelerator for oil and fat comprising the silicate, which is used in the method for accelerating solidification of oil and fat according to any one of claims 1 to 7.

9. A method for producing oil and fat, comprising: a solidification step in a production step; and performing fractionation after the solidification,
   wherein solidification is accelerated by using the method for accelerating solidification of oil and fat according to any one of claims 1 to 7, and a time until completion of the fractionation after the solidification is shortened.

## INTERNATIONAL SEARCH REPORT

| International application No. |
| --- |
| **PCT/JP2022/008746** |

**A. CLASSIFICATION OF SUBJECT MATTER**

*C11B 5/00*(2006.01)i; *C11B 15/00*(2006.01)i; *A23D 9/02*(2006.01)i
FI: C11B15/00; A23D9/02; C11B5/00

According to International Patent Classification (IPC) or to both national classification and IPC

**B. FIELDS SEARCHED**

Minimum documentation searched (classification system followed by classification symbols)

C11B5/00; C11B15/00; A23D9/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/MEDLINE/EMBASE/BIOSIS (STN)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-183080 A (FUJI OIL CO., LTD.) 22 October 2015 (2015-10-22) <br> claims, examples, etc. | 1-9 |
| A | WO 2013/146526 A1 (FUJI OIL CO., LTD.) 03 October 2013 (2013-10-03) <br> claims, examples, etc. | 1-9 |
| A | WO 2019/175256 A1 (SOCIETE DES PRODUITS NESTLE S.A.) 19 September 2019 (2019-09-19) <br> claims, examples | 1-9 |
| A | WO 2013/172075 A1 (J-OIL MILLS, INC.) 21 November 2013 (2013-11-21) <br> claims, examples, etc. | 1-9 |
| A | JP 2019-081157 A (MIZUSAWA INDUSTRIAL CHEMICALS, LTD.) 30 May 2019 (2019-05-30) <br> claims, examples, etc. | 1-9 |

☐ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 April 2022** | **10 May 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2022/008746**

| Patent document cited in search report | | | Publication date (day/month/year) | Patent family member(s) | | | Publication date (day/month/year) |
|---|---|---|---|---|---|---|---|
| JP | 2015-183080 | A | 22 October 2015 | (Family: none) | | | |
| WO | 2013/146526 | A1 | 03 October 2013 | (Family: none) | | | |
| WO | 2019/175256 | A1 | 19 September 2019 | US | 2021/0002582 | A1 | |
| | | | | EP | 3764803 | A1 | |
| | | | | CN | 111818804 | A | |
| WO | 2013/172075 | A1 | 21 November 2013 | US<br>claims, examples | 2015/0140196 | A1 | |
| | | | | EP | 2851414 | A1 | |
| | | | | CN | 104302749 | A | |
| JP | 2019-081157 | A | 30 May 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014011962 A
- WO 2013146526 A
- WO 2013172075 A
- JP 2015183080 A